# EUROPEAN PATENT SPECIFICATION

(11) **EP 1 864 900 B1**
(45) Date of publication and mention of the grant of the patent: **28.03.2018**
(21) Application number: 07252328.5
(22) Date of filing: 08.06.2007
(51) Int. Cl.: B62K 11/10, B62K 19/46, B62J 35/00

(54) **Motorcycle**
Motorrad
Motocyclette

(30) Priority: 09.06.2006 JP 2006160439
(43) Date of publication of application: 12.12.2007
(73) Proprietor: Yamaha Hatsudoki Kabushiki Kaisha, Iwata-shi, Shizuoka 438-8501 (JP)
(72) Inventor: Yamamoto, Yoshiaki, Iwata-shi, Shizuoka-ken 438-8501 (JP)
(74) Representative: Moreland, David

(56) References cited:
- EP-A- 0 953 501
- EP-A1- 0 581 310
- EP-A2- 1 296 036
- GB-A- 2 210 340
- JP-A- H0 796 878
- JP-A- H11 286 292
- US-A- 4 915 188

## Description

### FIELD OF THE INVENTION

The present invention relates to a motorcycle provided with a unit swing type engine unit, a storage member disposed above the engine unit, and a seat that opens and closes the storage member.

### BACKGROUND TO THE INVENTION

A scooter type motorcycle, for example, normally has a structure in which a storage box is disposed above a unit swing type engine unit that is supported by a body frame so as to be capable of swinging upward and downward. The storage box has a size that is sufficient to store, for example, a helmet. In addition, a seat that opens and closes the storage box is also disposed above the engine unit, and a fuel tank is disposed in front of the engine unit. Moreover, a body cover covers the periphery of the body frame.

In addition, in this type of motorcycle, in order that the rider can easily straddle the motorcycle when mounting and dismounting the motorcycle, an upper wall section of the body cover between the seat and a head pipe is disposed at the lowest possible position. A known motorcycle of the type described is disclosed in prior art reference JP-A-2005-112312.

However, in the above-described known motorcycle, a structure is adopted in which the large sized storage box and the seat that opens and closes the storage box are disposed above the engine unit. As a result, the seat height tends to be higher.

In addition, if the upper wall section of the body cover located to the front of the seat is lowered as in the above-described known motorcycle, the space beneath the upper wall section is reduced to a corresponding extent. As a result, in the case that the fuel tank is disposed beneath the upper wall section, there are cases when it is not possible to maintain adequate tank capacity.

The invention has been devised in light of the above-described circumstances, and it is an object thereof to provide a motorcycle that easily allows a rider to straddle the upper wall section when mounting and dismounting the motorcycle while maintaining adequate storage capacity of a storage member, providing a low seat height, and maintaining adequate fuel tank capacity.

US4915188, GB2210340, EP1296036 and EP0581310 each disclose a motorcycle that includes a body frame and an engine unit swingably supported by the frame. In each case, the engine is not directly coupled to the frame but is secured via a linkage mechanism.

US4915188 further comprises a rider's seat that closes an access opening at the top of a storage compartment. A portion of a bottom wall of the storage compartment is formed into a cavity for storing a battery or electric parts. A steeply inclined section of the storage compartment extends from the cavity in conformity with a rear frame and a gently inclined section extends from the steeply inclined section along the rear frame to define a stepped shape.

The motorcycle of GB2210340 comprises a helmet container disposed above the engine and having a seat mounted on and fastened to the helmet container.

The motorcycle of EP1296036 comprises a seat provided at the center of the vehicle body, and a fuel tank is provided below the seat. A helmet box is provided rearwardly of the seat. The engine unit is mounted at the center of the vehicle body.

In the motorcycle of EP0581310, the motorcycle comprises a seat, a luggage box located below the seat and a swing type engine being located below the luggage box.

JP7096878 describes a motorcycle having a pivot shaft prolonged in a cross direction in the centre of a lower part of the frame and a front end of the engine is pivotably supported by the pivot shaft, enabling free rotation. The body frame is arranged to form a single storage compartment for storing a helmet. The seat is located on an upper opening of the storage compartment. The storage compartment is located above the engine.

JP11286292 describes a motorcycle in which the engine unit is pivotably supported on a cross-direction centre part of the frame, enabling a free vertical swing. The frame also includes two side frames. The rear of the side frames incline upward and then horizontally. The rear parts of the horizontal sections of the bike frame are arranged to support the rear end part of a seat. A fuel tank is located between the two rising portions of the frame. A storage box for storing a helmet is located between the horizontal portions at the rear of the bike frame. A battery is located between the storage box and the fuel tank. The engine unit is located approximately in the centre of the bike, in front of and below the storage compartment.

EP0953501 describes a motorcycle having an engine that is indirectly mounted on a frame via a linkage mechanism. The motorcycle comprises a two rider seat, a fuel tank being disposed at the front lower part of the seat and a storage compartment is disposed behind the fuel tank.

### SUMMARY OF THE INVENTION

Various aspects of the present invention are defined in the independent claim 1. Some preferred features are defined in the dependent claims. In accordance with the present invention there is provided a motorcycle as set out in independent claim 1. It will be understood by those of skill in the art that the term "swingably" implies that the engine unit is mounted in such a manner that it is permitted to pivot or rotate relative to the body frame.

The motorcycle may further comprise:
a fuel tank disposed in front of the engine unit; and
a body cover that covers the top and sides of the fuel tank.

The body cover may have an upper wall section that covers above the fuel tank, the upper wall section being located at a position that is lower than the seat, wherein a front edge section of the seat may be inclined rearward and upward so as to be generally continuous with the upper wall section of the body cover when the motorcycle is viewed from a side thereof.

An upper wall section of the body cover and a front edge section of the seat may form a generally curved shape that bulges downward when the motorcycle is viewed from a side thereof.

The seat may have a seat base plate, and an upper wall section of the body cover and the seat base plate of the seat may form a generally curved shape that bulges upwards when the motorcycle is viewed from a side thereof.

The seat may have a seat base plate and a seat cushion disposed above the seat base plate, wherein a front section of the seat base plate may protrude further forward than a front end of the seat cushion, and may be inserted below an upper wall section of the body cover.

A centre of turning of the seat may be positioned at the front section of the seat base plate.

The object storage member may have a lower storage member that is disposed at a position between the fuel tank and the engine unit.

The lower storage member may be formed by forming a base wall section of the object storage member to bulge downwards.

The lower storage member may comprise a battery housing member for housing a battery.

A cover adapted to open and close the battery housing member may be provided in the base wall section of the object storage member.

The object storage member may comprise a helmet storage member adapted to store a helmet.

The helmet storage member may comprise a front storage member and a rear storage member that is disposed further to the rear of the motorcycle than the front storage member.

The motorcycle may further comprise a suspension unit that connects the engine unit and the body frame, wherein the seat may comprises a main seat and a tandem seat disposed to the rear of the main seat, the object storage member having a first storage member and a second storage member, and the suspension unit being disposed between the first storage member and the second storage member when the motorcycle is viewed from above.

A base wall section of the second storage member may be located at a position that is higher than a base wall section of the first storage member. A central storage member that connects the first storage member and the second storage member may be formed between the first storage member and the second storage member, and the suspension unit may be disposed below the central storage member.

The suspension unit may be disposed to extend generally horizontally in the front-rear direction of the motorcycle when the motorcycle is viewed from the side thereof.

According to the motorcycle of the present invention, the swing centre of the engine unit is disposed below the engine unit. As a result of adopting this structure, a space is formed above the engine unit, and the storage member can be disposed in the space. Accordingly, the height direction position of the storage member can be lowered, thus making it possible to ensure adequate storage space and also lower the seat height.

### BRIEF DESCRIPTION OF THE DRAWINGS

These and other aspects of the present invention will now be described, by way of example only, with reference to the accompanying drawings, in which:
Fig. 1 is a side view of a motorcycle according to an embodiment of the invention;
Fig. 2 is a cross sectional view of a storage box that is provided in the motorcycle;
Fig. 3 is a plan view of a body frame in which the storage box is provided;
Fig. 4 is a side view of a main seat provided on a front section of the storage box;
Fig. 5 is a side view of a tandem seat provided on a rear section of the storage box;
Fig. 6 is a side view of a fuel tank provided at a front side of the storage box;
Fig. 7 is a side view of a body cover of the motorcycle;
Fig. 8 is a rear view of a leg shield of the body cover;
Fig. 9 is a cross sectional view along line VIII-VIII of Fig. 8 and
Fig. 10 is a cross sectional view along line IX-IX of Fig. 8.

### DETAILED DESCRIPTION OF THE DRAWINGS

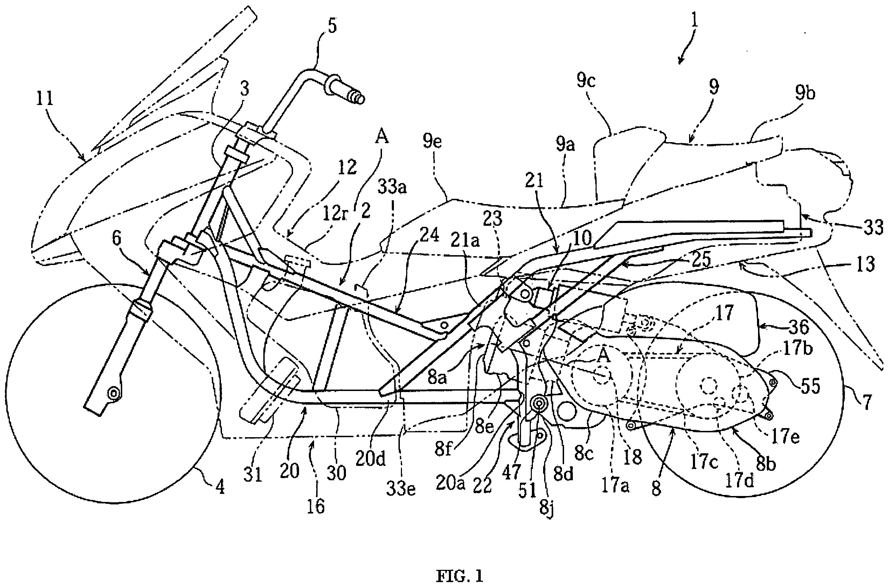

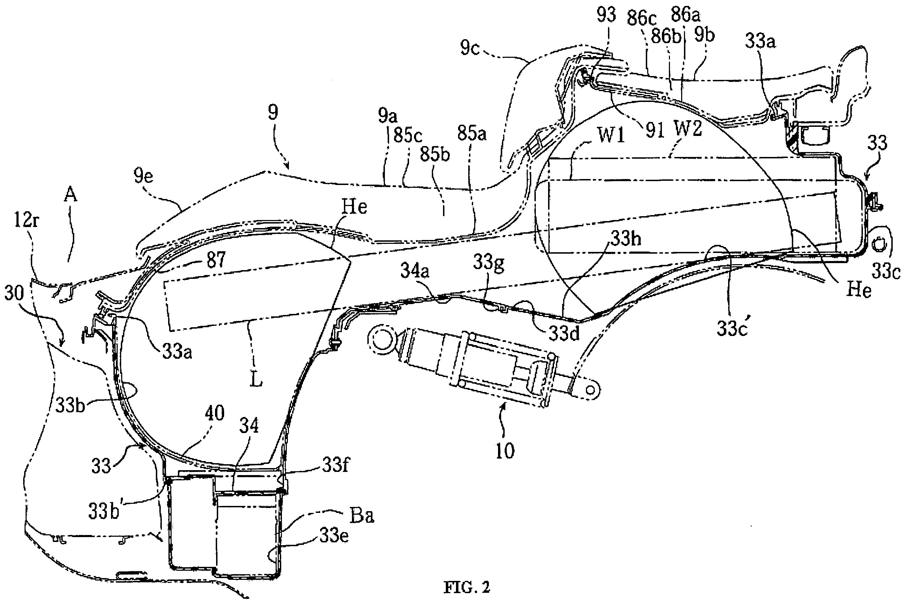

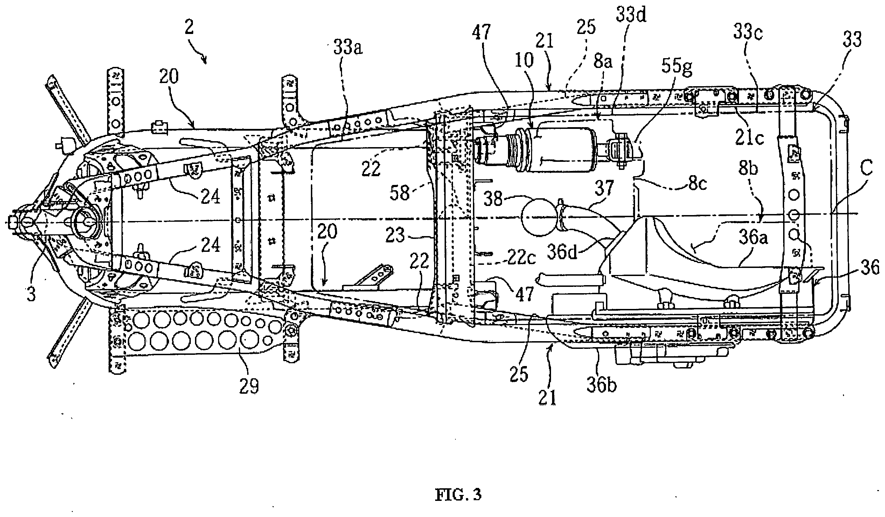

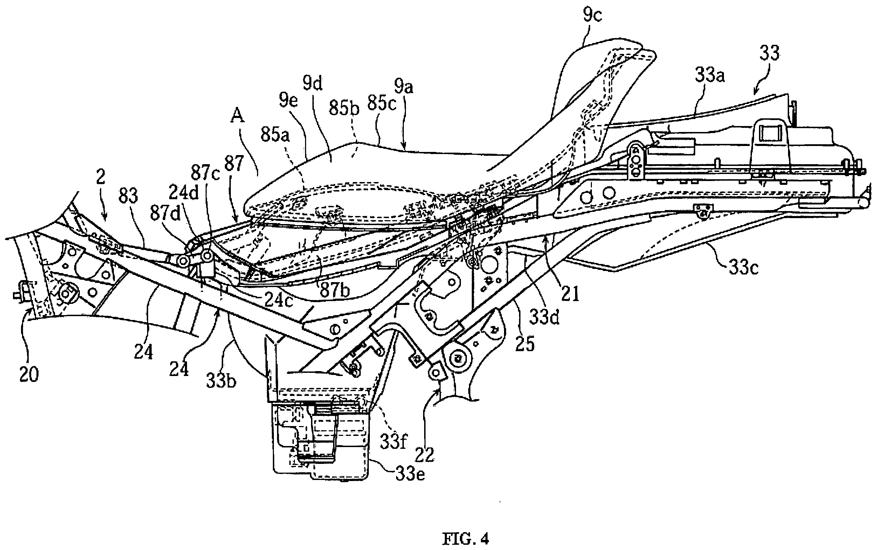

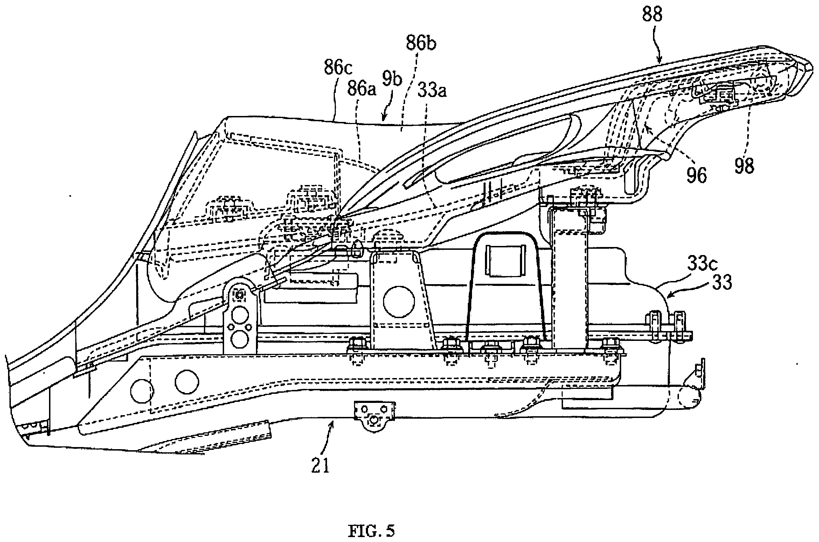

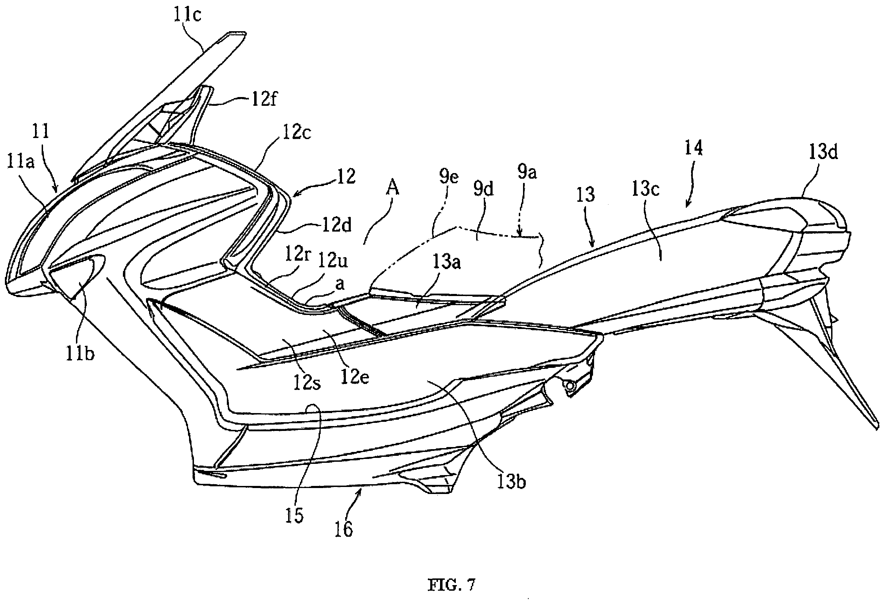

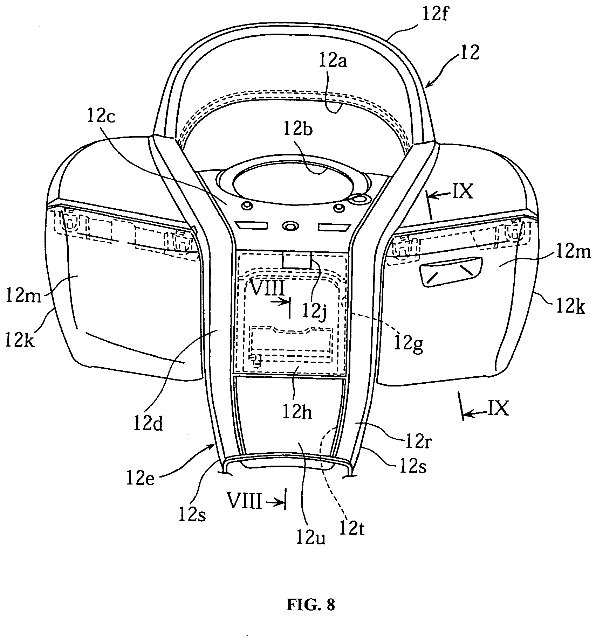

Fig. 1 to Fig. 9 are figures that illustrate a motorcycle according to the embodiment of the invention. Note that, the terms front and rear, and left and right as used in this embodiment indicate the front and rear and the left and right when viewed from a rider seated on a seat.

In the figures, reference numeral 1 is a scooter type motorcycle. This motorcycle 1 includes a body frame 2, a front fork 6, a unit swing type engine unit 8, a storage box 33, and a straddle-type seat 9. The front fork 6 is rotatably or turnably supported by a head pipe 3 positioned at the front end of the body frame 2 such that the front fork can be steered to the left and right. A front wheel 4 is provided at a lower end section of the front fork and a steering handle 5 is provided at an upper end section of the front fork. The engine unit 8 is supported by the body frame 2 such that a front end section of the engine unit 8 can swing upward and downward, and has a rear wheel 7 disposed at a rear end section thereof. The storage box 33 is disposed above the engine unit 8 in the body frame 2. The straddle-type seat 9 is positioned so as to be able to open and close the storage box 33.

The body frame 2 has a left and right pair of down tubes 20, 20, a left and right pair of seat rails 21, 21, a left and right pair of engine suspension frames 22, 22, and a cross member 23. The pair of down tubes 20 extend rearward and downward from a lower end section of the head pipe 3 while expanding to the outside in the vehicle width direction, and then extend rearward from the lower end in a generally horizontal manner. The pair of seat rails 21 extend rearward and diagonally upward from respective front-rear direction central sections 20d of the respective left and right down tubes 20. The engine suspension frames 22 extend in the upward-downward direction from respective rear end surfaces 20a of the respective down tubes 20, and have respective upper end sections that are connected to the respective seat rails 21. The cross member 23 connects in the vehicle width direction in the vicinity of respective connection sections 21a with the engine suspension frames 22 of the left and right seat rails 21.

In addition, the body frame 2 includes left and right upper tubes 24, 24 and left and right seat stays 25, 25. The upper tubes 24 extend generally linearly to the rear and diagonally downwards from the head pipe 3, and have a rear end surface that is connected to the seat rails 21. The seat stays 25 connect the engine suspension frames 22 and a rear section of the seat rails 21.

Left and right pivot members 47 are disposed in the vicinity of a connection section of the engine suspension frames 22 and the down tubes 20.

The engine unit 8 is formed by integrally joining an engine body 8a and a transmission case 8b that includes a belt chamber that houses a V-belt type continuously variable transmission 17.

The engine body 8a is a 4-stroke, single cylinder water-cooled engine that is mounted such that a cylinder axis A is generally horizontal, and has a structure in which a cylinder block 8d, a cylinder head 8e, and a head cover 8f are joined together in that order on a front mating surface of a crank case 8c that houses a crank shaft 18 that is disposed to extend horizontally in the vehicle width direction.

The V-belt type continuously variable transmission 17 has a structure in which a drive pulley 17a that is disposed at a left side end section of the crank shaft 18 inside the transmission case 8b is coupled via a V-belt 17c to a driven pulley 17b disposed in a rear end section of the transmission case 8b. A main shaft 17d and a drive shaft 17e that transmit rotation of the driven pulley 17b are disposed inside the transmission case 8b, and the rear wheel 7 is mounted on the drive shaft 17e.

Left and right suspension members 8j, 8j are formed so as to protrude forward in a lower wall section of the crank case 8c. The suspension members 8j are supported by the pivot members 47 via a pivot shaft (centre of swing) 51. As a result, the engine unit 8 is supported so as to be capable of swinging upward and downward, centering on a point at the lower side of the crank case 8c.

An air cleaner 36 is disposed and fixed to an upper wall surface of the transmission case 8b, and the air cleaner 36 is capable of swinging upward and downward along with the transmission case 8b. The air cleaner 36 has a length in the front-rear direction that is large enough to extend along roughly the entire length of the transmission case 8b.

A rear arm 55 is disposed, when the rear wheel 7 is taken as a reference point, on the opposite side to the engine unit 8. The rear arm 55 has a front end section that is fixed to the engine unit 8, and a rear end section that supports the rear wheel 7.

The rear arm 55 and the cross member 23 are connected by a rear suspension 10. When the rear wheel 7 is taken as a reference point, the rear suspension 10, when viewed from above, is disposed on the opposite side to the air cleaner 36, and is disposed to the front side of the air cleaner 36. Furthermore, when viewed from the side of the vehicle, the rear suspension 10 is disposed above the engine unit 8, and is disposed to extend generally horizontally in the vehicle front-rear direction so as to be generally parallel with the cylinder axis A of the engine unit 8.

A fuel tank 30 is disposed at a position to the front of the engine unit 8 in the space that is surrounded by the down tubes 20 and the upper tubes 24.

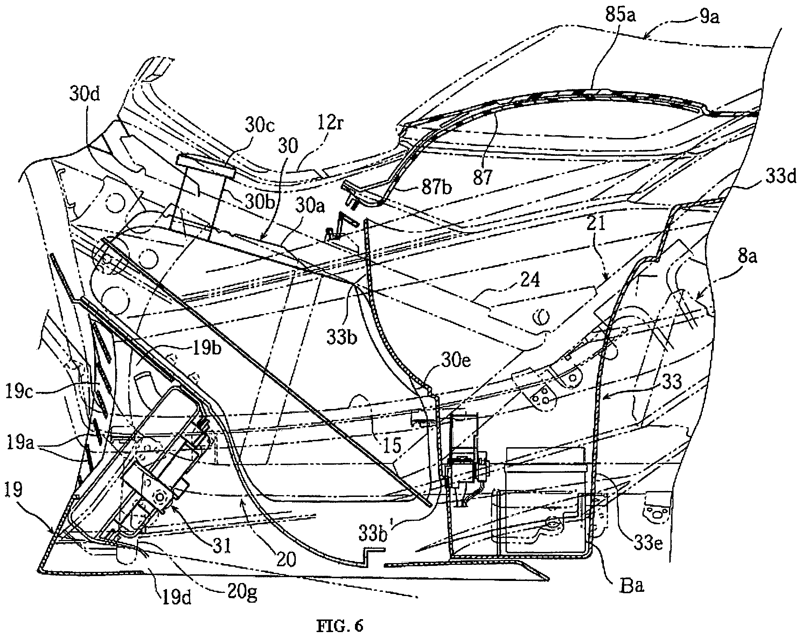

The fuel tank 30, as shown in Fig. 6, includes a tank body 30a that is fixed to the body frame 2, a fuel filling hole or tube 30b that is formed to extend upwards from the tank body 30a, and a cap 30c that opens and closes the filling hole 30b.

The tank body 30a is disposed to rise or extend diagonally upward such that a front section 30d thereof is at a higher position than a rear section 30e. The fuel filling hole 30b is connected to an upper wall front end section of the front section 30d.

A radiator 31 is disposed beneath the front section 30d of the fuel tank 30. The radiator 31 is disposed to extend rearward and diagonally upward at roughly a 45 degree angle of inclination, and is attached and fixed to a cross pipe 20g that connects respective lower sides of the down tubes 20.

The radiator 31 is disposed within a traveling wind induction passage 19b that has a generally tubular shape and that is formed in the inner fender 19. A traveling wind intake port 19c of the induction passage 19b opens in the rear of a front fender (not shown), and an outflow port 19d opens to the road surface. A louver 19a that guides traveling wind to the radiator 31 is formed in the intake port 19c.

Because the fuel tank 30 is disposed to rise or extend upwards such that the front section 30d of the fuel tank 30 is at a position higher than the rear section 30e, the capacity of the fuel tank 30 can be maintained while an open space is formed beneath the front section 30d. Accordingly, the radiator 31 can be disposed in the open space.

The storage box 33 is disposed in the space surrounded by the down tubes 20, the seat rails 21, and the engine suspension frames 22 at the section of the rear side of the fuel tank 30.

The storage box 33 has a length that is large enough to extend along roughly the entire length of the front-rear direction dimension of the seat 9. An opening 33a of the storage box 33 is positioned at a location that is higher than the upper tubes 24 and the seat rails 21.

The storage box 33 includes a front storage member (first storage member) 33b, a rear storage member (second storage member) 33c, and a central storage member 33d. The front storage member 33b has a size that is sufficient to store a helmet He. The rear storage member 33c has a size that is sufficient to store the same helmet He, or an attaché case W1, or a beer crate W2. The central storage member 33d is formed between the front and the rear storage member 33b, 33c. Together, the front and the rear storage member 33b, 33c and the central storage member 33d are capable of storing a long object L like a bat.

The front storage member 33b continues from the central storage member 33d and is formed to extend downwards. The rear storage member 33c continues from the central storage member 33d and is formed to extend upwards. A base wall section 33c' of the rear storage member 33c is located at a position that is higher than a base wall section 33b' of the front storage member 33b.

A battery housing member (lower housing member) 33e is formed to bulge and extend downwards in the base wall section 33b' of the front storage member 33b. The battery housing member 33e is disposed between the engine unit 8 and the fuel tank 30, and protrudes further downward than the down tubes 20. In addition, a tool storage member 33f is formed between the battery housing member 33e and the front storage member 33b.

Because the battery housing member 33e is disposed to protrude further downwards than the down tubes 20 between the engine unit 8 and the fuel tank 30 in the above-described manner, it is possible to concentrate mass at the vicinity of the centre of gravity of the vehicle body. As a result, the centre of gravity of the vehicle body can be made lower.

In addition, a cover 34 that opens and covers the battery housing member 33e is disposed at the base wall section 33b' of the front storage member 33b. Maintenance of a battery Ba can be carried out by opening the seat 9 and then opening the cover 34. In other words, if the seat 9 is not opened, it is not possible to touch the battery Ba. Accordingly, it is possible to prevent people from tampering, or the like, with the battery Ba.

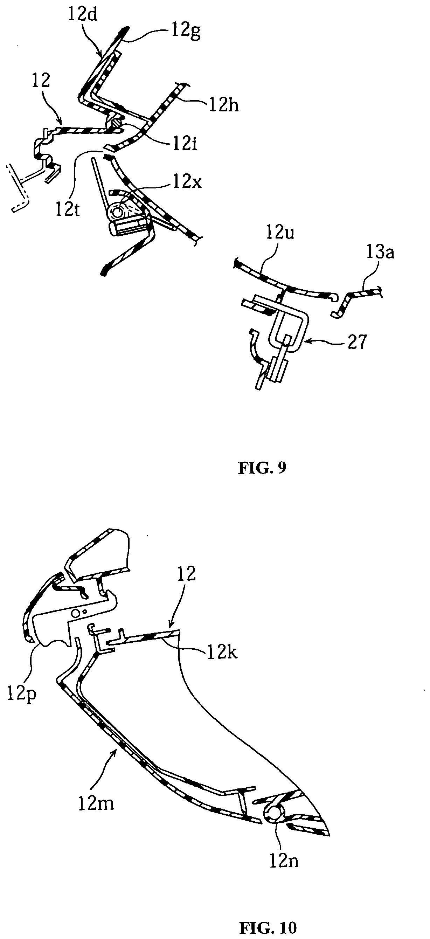

The rear suspension 10 is disposed generally parallel with the central storage member 33d beneath the central storage member 33d. Furthermore, when viewed from above, the rear suspension 10 is disposed between the front storage member 33a and the rear storage member 33c (refer to Fig. 10).

A maintenance opening 33g, which can be opened and closed using the cover 34a, is formed in a base wall 33h of the central storage member 33d. When the cover 34a is opened, it is possible to carry out initial adjustment of the rear suspension 10 from the inside of the storage box 33.

The seat 9 includes a main seat 9a on which the rider sits, a tandem seat 9b on which a rear passenger sits, and a backrest 9c that is disposed at a rear end section of the main seat 9a and that supports the lumbar region of the rider.

The main seat 9a has a structure including a seat cushion 85b that is disposed on top of a seat base plate 85a, and a surface layer 85c that covers the seat cushion 85b. The tandem seat 9b is formed separately from the main seat 9a, and, in a similar manner to above, has a structure that includes a seat cushion 86b disposed on a seat base plate 86a and a surface layer 86c that covers the seat cushion 86b.

Each seat base plate 85a, 86a is formed with a bowl like shape that bulges upwards from the opening 33a of the storage box 33. As a result, the storage capacity of the storage box 33 is made larger.

The main seat 9a covers the front storage member 33b and the central storage member 33d of the storage box 33 such that the front storage member 33b and the central storage member 33d can be opened and closed. The tandem seat 9b covers the rear storage member 33c of the storage box 33 such that the rear storage member 33c can be opened and closed. When the main seat 9a and the tandem seat 9b are opened, the entire area of the opening 33a of the storage box 33 is open to the top.

A bottom plate 87 is attached to a front lower surface of the seat base plate 85a of the main seat 9a. The bottom plate 87 has an expanded section 87b that extends from a lower edge of the main seat 9a so as to spread out toward the front and the left and right sides, and covers the front storage member 33b.

A left and right pair of hinges 87c, 87c is formed to protrude forward in a front edge of the expanded section 87b. The left and right hinges 87c are rotatably supported via a hinge pin 24d by an inverted U-shaped hinge bracket 24c that bridges between and is joined with the upper tubes 24. As a result, the main seat 9a is supported such that it is capable of being turned upward or downward centering on the hinge pin 24d that is located further forward than the front edge of the main seat 9a. Note that, reference numeral 83 is a stopper rod that controls the fully open position of the main seat 9a.

The tandem seat 9b is disposed at a position that is higher than the main seat 9a. A grab bar 88 that can be held by the rear passenger is disposed around the circumference of a rear section of the tandem seat 9b. The grab bar 88 is fixed and tightened to the body frame 2 by bolts. As a result, it is possible to ensure that sufficient strength is provided to withstand input force applied to the grab bar 88 when accelerating or braking.

When viewed from above, the grab bar 88 has generally a U-shape that surrounds the left and right side sections and the rear section of the tandem seat 9b. In addition, the grab bar 88, when viewed form the side, is located higher than the opening 33a of the storage box 33, and extends further to the rear than the rear end of the opening 33a.

A front end section of a hinge bracket 96 is fixed and tightened by bolts to a rear end section of the tandem seat 9b. The hinge bracket 96 extends to the rear from a rear edge of the tandem seat 9b, and has a rear end section that is turnably supported by the grab bar 88 via a hinge pin 98. As a result of using this structure, the tandem seat 9b is supported such that it can be turned upward and downward centering on the hinge pin 98 that is located further to the rear than the rear end of the tandem seat 9b.

The body frame 2 is surrounded by a body cover 14. The body cover 14 includes a front cover 11, a leg shield 12, an under cover 16, and left and right side covers 13, 13. The front cover 11 covers the front side of the front fork 6 and the leg shield 12 covers the rear side of the front fork 6. The under cover 16 covers below the leg shield 12 on the sides, and also covers below the down tubes 20. The left and right side covers 13, 13 cover the surroundings of the area below the seat 9.

A head light 11a and left and right flasher lights 11b, 11b are disposed in the front cover 11.

The side covers 13 include a seat side section 13a, a front side section 13b, and a rear side section 13c. The seat side section 13a is arranged to cover and surround a front edge section of the main seat 9a, and the front side section 13b extends forward from the seat side section 13a. The rear side section 13c extends rearward from a rear upper edge of the front side section 13b and covers a lower edge section of the tandem seat 9b. Tail lights 13d are disposed in respective rear end sections of the left and right rear side sections 13c.

The seat side sections 13a are inclined to slope forward and downward from a front edge section of the main seat 9a, and the expanded section 87b of the bottom plate 87 inserts to the lower side of the seat side section 13a. The expanded section 87b is covered by the seat side section 13a.

A lower edge section of the leg shield 12 is fitted on and connected with an upper edge section of the front side section 13b. A foot board 15 that extends to the front and rear is disposed at a lower edge section of the front side section.

The leg shield 12 includes: an inclined wall section 12c which inclines downward to the rear and in which a meter unit mounting hole 12a and a handle insertion hole 12b are formed; a vertical wall section 12d that extends diagonally forward and downward from a rear edge of the inclined wall section 12c; and a tunnel section 12e that extends rearward from a lower edge of the vertical wall section 12d.

A rib member 12f that extends upwards is formed in a front side of the meter unit mounting hole 12a of the inclined wall section 12c, and a wind shield 11c is disposed on the front cover 11 at the front side of the rib member 12f.

A central storage recess 12g is formed to bulge forward in the vertical wall section 12d of the leg shield 12. The central storage recess 12g is covered such that it can be opened or closed by a lid 12h that is disposed so as to be generally flush with the vertical wall section 12d. This lid 12h has a lower end section that is turnably supported by a hinge pin 12i. A handle 12j is provided on an upper end section of the lid 12h, and the lid 12h can be opened by the rider pulling the handle 12j towards himself/herself.

Left and right storage recesses 12k, 12k are formed to bulge outwards to the front at the left and right outer sides of the vertical wall section 12d of the leg shield 12. The left and right storage recesses 12k, 12k are covered by and can be opened and closed by respective lids 12m, 12m. Each lid 12m is turnably supported at a lower end section thereof by a hinge 12n. Respective handles 12p are provided on respective upper end sections of the lids 12m, and each lid 12m can be opened by the rider pulling the handle 12p towards himself/herself.

The tunnel section 12e includes an upper wall section 12r that covers above the fuel tank 30, and left and right side wall sections 12s, 12s that extend downward from left and right edges of the upper wall section 12r and cover the left and right sides of the fuel tank 30. A front edge section of the seat side section 13a is fitted and connected to a rear edge section of the tunnel section 12e, and an upper edge section of the front side section 13b is fitted and connected to the lower edge section of the tunnel section 12e.

An opening 12t is formed in a section of the upper wall section 12r that faces the fuel filling hole 30b of the fuel tank 30. A lid 12u that is generally flush with the upper wall section 12r is provided in the opening 12t. The lid 12u is turnably supported at a front end section thereof by a hinge pin 12x such that the lid 12u can be turned upward or downward. In addition, a lock mechanism 27 is provided at a rear end section of the lid 12u such that the lid 12u can be locked to the vehicle body side.

When the vehicle is viewed from the side, a boundary line a of the upper wall section 12r and the lid 12u inclines downward and rearward from a lower edge of the vertical wall section 12d, and then inclines upward and rearward from a rear end section so as to form a gentle curved shape. In addition, the boundary line a forms a continuous surface with an upper surface of the seat side section 13a.

When viewed from above, a front section 9d of the main seat 9a has a vehicle width direction dimension that becomes smaller as the front section 9d extends to the front. When viewed from the side of the vehicle, a front edge section 9e inclines upward to the rear so as to be generally continuous with the upper side wall 12r. The angle of inclination of the front edge section 9e is set at an angle of roughly 30 degrees with respect to the horizontal plane.

When viewed from the side of the vehicle, the upper side wall 12r of the leg shield 12 and the front edge section 9e of the main seat 9a are continuous with each other and form a generally curved shape. As a result, the rider can easily straddle over a mounting section A that is formed between the front edge section 9e of the main seat 9a, and the vertical wall section 12d and the upper wall section 12r of the leg shield 12 when mounting and dismounting.

According to this embodiment, the centre of turning of the support of the engine unit 8 that allows the engine unit 8 to swing upward and downward is located below the cylinder block 8d of the engine unit 8. As a result, the space that is formed above the engine unit 8 can be used to lower the height direction position of the storage box 33, whereby adequate storage capacity of the storage box 33 is ensured and the height of the seat can be lowered.

In this embodiment, when viewed from the side of the vehicle, the front edge section 9e of the main seat 9a is inclined upwards to the rear so as to be generally continuous with the upper wall section 12r of the leg shield 12. As a result, the mounting section A formed between the main seat 9a and the leg shield 12 is large, which makes it easier for the rider to straddle over the mounting section A when mounting and dismounting. As a result, if the fuel tank 30 is disposed beneath the upper wall section 12r of the leg shield 12, the height of the upper wall section 12r can be raised, whereby adequate tank capacity can be ensured. At the same time, it is possible to provide the large mounting section A, which allows the rider to easily straddle the vehicle when mounting and dismounting.

In this embodiment, because the upper wall section 12r of the leg shield 12 and the front edge section 9e of the main seat 9a are formed to have the generally curved shape, the ease with which the rider can straddle the vehicle is raised still further, and thus the ease of mounting/dismounting is improved.

Since the upper wall section 12r of the leg shield 12, the seat base plate 85a of the main seat 9a, and the bottom plate 87 form a curved shape so as to be generally continuous with each other, it is possible to ensure that the storage box 33 has adequate capacity while disposing the front edge section 9e of the main seat 9a and the upper wall section 12r to be generally continuous with each other.

Because the bottom plate 87 is disposed to protrude further forward than the main seat 9a, and is inserted below the upper wall section 12r, the opening of the storage box 33 below the main seat 9a can be expanded to the front. Accordingly it is possible to store large objects like a helmet.

Because the centre of turning of the main seat 9a is positioned at the front end section of the bottom plate 87, the storage box 33 can be lengthened to the front from the front edge of the main seat 9a. Accordingly, the storage capacity of the storage box 33 can be increased.

In this embodiment, the battery housing member 33e is formed to extend downwards in the storage box 33 such that the battery housing member 33e is positioned between the fuel tank 30 and the engine unit 8. As a result, the seat height of the main seat 9a can be lower still further, and the centre of gravity of the vehicle body can be lowered.

The front storage member 33b and the rear storage member 33c that have a large capacity that is sufficient to store a helmet are formed in the storage box 33. As a result, not only is it possible to improve the ease of use of the storage box 33, but also to prevent the helmet being tampered with or scratched.

In this embodiment, the rear suspension 10 is disposed to extend generally horizontally in the vehicle front-rear direction between the front storage member 33b disposed below the main seat 9a and the rear storage member 33c disposed below the tandem seat 9b. Accordingly, adequate capacity of the front and rear storage member 33b, 33c can be ensured while the free space between the storage members 33b, 33c is beneficially used to dispose the rear suspension 10.

### Description of the Reference Numerals and Signs

1 Motorcycle
2 Body Frame
8 Unit Swing Type Engine Unit
9 Seat
9a Main Seat
9e Front Edge Section
9b Tandem Seat
10 Rear Suspension
12 Leg Shield (Body Cover)
12r Upper Wall Section
30 Fuel Tank
33 Storage Box (Storage Member)
33b Front Storage Member (First Storage Member, Helmet Storage Member)
33b' Base Wall Section
33c Rear Storage Member (Second Storage Member, Helmet Storage Member)
33d Central Storage Member
33e Battery Housing Member (Lower Housing Member)
34 Cover
51 Pivot Shaft (Centre of Swing)
85b Seat Cushion
87 Bottom Plate (Seat Base Plate)
87c Hinge (Centre of Seat Rotation)

## Claims

1. A motorcycle (1) comprising:
a body frame (2); and
an engine unit (8) swingably supported by the body frame (2) so as to be capable of swinging up and down around a swing centre, wherein a front end section of the engine unit (8) can swing upward and downward, the engine unit (8) is formed by integrally joining an engine body (8a) and a transmission case (8b), the engine body (8a) is a single cylinder engine that is mounted such that a cylinder axis (A) is generally horizontal and has a structure in which a cylinder block (8d) and a cylinder head (8e) are joined together in that order on a front mating surface of a crank case (8c) that houses a crank shaft (18) that is disposed to extend horizontally in the vehicle width direction, the engine unit (8) has a rear wheel (7) disposed at a rear end section of the transmission case (8b), left and right suspension members (8j, 8j) are formed so as to protrude forward in a lower wall section of the crank case (8c), the suspension members (8j,8j) are supported by left and right pivot members (47,47) of the body frame (2) via a pivot shaft (51) so that the engine unit (8) is supported so as to be capable of swinging upward and downward, centering on a point at the lower side of the crank case (8c), the swing centre is located below the cylinder block (8d) of the engine unit (8) between a front end point and a rear end point of the cylinder block (8d) of the engine body (8a) in a front-rear direction of the motorcycle (1);
the motorcycle (1) further comprising:
an object storage member (33) disposed above the engine unit (8); and
a seat (9) adapted to open and close the object storage member (33).

2. The motorcycle (1) of claim 1, further comprising:
a fuel tank (30) disposed in front of the engine unit (8); and
a body cover (12) that covers the top and sides of the fuel tank (30).

3. The motorcycle (1) according to claim 2, wherein the body cover (12) has an upper wall section (12r) that covers above the fuel tank (30), the upper wall section (12r) being located at a position that is lower than the seat (9), wherein a front edge section (9e) of the seat (9) is inclined rearward and upward so as to be generally continuous with the upper wall section (12r) of the body cover (12) when the motorcycle (1) is viewed from a side thereof.

4. The motorcycle (1) according to claims 2 or 3, wherein an upper wall section (12r) of the body cover (12) and a front edge section (9e) of the seat (9) form a generally curved shape that bulges downward when the motorcycle (1) is viewed from a side thereof.

5. The motorcycle (1) according to any one of claims 2, 3 or 4, wherein the seat (9) has a seat base plate (87), and an upper wall section (12r) of the body cover (12) and the seat base plate (87) of the seat (9) form a generally curved shape that bulges upwards when the motorcycle (1) is viewed from a side thereof.

6. The motorcycle (1) according to any one of claims 2 to 5, wherein the seat (9) has a seat base plate (87) and a seat cushion (85b) disposed above the seat base plate (87), wherein a front section (87b) of the seat base plate (87) protrudes further forward than a front end of the seat cushion (85b), and is inserted below an upper wall section (12r) of the body cover (12).

7. The motorcycle (1) according to claim 5 or 6, wherein a centre of turning of the seat (9) is positioned at the front section of the seat base plate (87).

8. The motorcycle (1) according to any one of claims 2 to 7, wherein the object storage member (33) has a lower storage member (33e) that is disposed at a position between the fuel tank (30) and the engine unit (8).

9. The motorcycle (1) according to claim 8, wherein the lower storage member (33e) is formed by forming a base wall section of the object storage member (33) to bulge downwards.

10. The motorcycle (1) according to claims 8 or 9, wherein the lower storage member (33e) comprises a battery housing member for housing a battery (Ba).

11. The motorcycle (1) according to claim 10, wherein a cover (34) adapted to open and close the battery housing member is provided in the base wall section of the object storage member (33).

12. The motorcycle (1) according to any preceding claim, wherein the object storage member (33) comprises a helmet storage member (33b, 33c) adapted to store a helmet (He).

13. The motorcycle (1) according to claim 12, wherein the helmet storage member (33b, 33c) comprises a front storage member (33b) and a rear storage member (33c) that is disposed further to the rear of the motorcycle than the front storage member (33b).

14. The motorcycle (1) according to any preceding claim further comprising a suspension unit (10) that connects the engine unit (8) and the body frame (2), wherein the seat (9) comprises a main seat (9a) and a tandem seat (9b) disposed to the rear of the main seat (9a), the object storage member (33) has a first storage member (33b) and a second storage member (33c), and the suspension unit (10) is disposed between the first storage member (33b) and the second storage member (33c) when the motorcycle (1) is viewed from above.

15. The motorcycle (1) according to claim 14, wherein a base wall section of the second storage member (33c) is located at a position that is higher than a base wall section of the first storage member (33b), a central storage member (33d) that connects the first storage (33b) member and the second storage member (33c) is formed between the first storage member (33b) and the second storage member (33c), and the suspension unit (10) is disposed below the central storage member (33d).

16. The motorcycle (1) according to claims 14 or 15, wherein the suspension unit (10) is disposed to extend generally horizontally in the front-rear direction of the motorcycle (1) when the motorcycle is viewed from the side thereof.

## Patentansprüche

1. Motorrad (1), umfassend:
einen Karosserierahmen (2); und
eine Motoreinheit (8), die durch den Karosserierahmen (2) schwenkbar gelagert ist, um in der Lage zu sein, um ein Schwenkzentrum nach oben und unten zu schwenken, wobei ein vorderer Endabschnitt der Motoreinheit (8) auf- und abwärts schwenken kann, die Motoreinheit (8) durch ganzheitliches Verbinden eines Motorkörpers (8a) und eines Getriebegehäuses (8b) gebildet ist, der Motorkörper (8a) ein Einzylindermotor ist, der so montiert ist, dass eine Zylinderachse (A) im Allgemeinen horizontal ist und eine Struktur hat, in der ein Zylinderblock (8d) und ein Zylinderkopf (8e) in dieser Reihenfolge an einer vorderen Passfläche eines Kurbelgehäuses (8c) verbunden sind, das eine Kurbelwelle (18) aufnimmt, die angeordnet ist, um sich horizontal in die Richtung der Fahrzeugbreite zu erstrecken, die Motoreinheit (8) ein Hinterrad (7) hat, das an einem hinteren Endabschnitt des Getriebegehäuses (8b) angeordnet ist, ein linkes und ein rechtes Aufhängungselement (8j, 8j) gebildet sind, um in einem unteren Wandabschnitt des Kurbelgehäuses (8c) nach vorne überzustehen, die Aufhängungselemente (8j, 8j) durch ein linkes und ein rechtes Schwenkelement (47, 47) des Karosserierahmens (2) über eine Schwenkwelle (51) gelagert sind, sodass die Motoreinheit (8) gelagert ist, um in der Lage zu sein, auf- und abwärts zu schwenken und sich an einem Punkt an der unteren Seite des Kurbelgehäuses (8c) zu zentrieren, wobei sich das Schwenkzentrum unter dem Zylinderblock (8d) der Motoreinheit (8) zwischen einem vorderen Endpunkt und einem hinteren Endpunkt des Zylinderblocks (8d) des Motorkörpers (8a) in einer Richtung von vorne nach hinten des Motorrads (1) befindet;
wobei das Motorrad (1) ferner Folgendes umfasst:
ein Objektaufbewahrungselement (33), das über der Motoreinheit (8) angeordnet ist; und
einen Sitz (9), der angepasst ist, um das Objektaufbewahrungselement (33) zu öffnen und zu schließen.

2. Motorrad (1) nach Anspruch 1, ferner umfassend:
einen Kraftstofftank (30), der vor der Motoreinheit (8) angeordnet ist; und
eine Karosserieabdeckung (12), die die Oberseite und die Seiten des Kraftstofftanks (30) abdeckt.

3. Motorrad (1) nach Anspruch 2, wobei die Karosserieabdeckung (12) einen oberen Wandabschnitt (12r) hat, der über dem Kraftstofftank (30) abdeckt, wobei der obere Wandabschnitt (12r) an einer Position angeordnet ist, die niedriger als der Sitz (9) ist, wobei ein Vorderkantenabschnitt (9e) des Sitzes (9) nach hinten und nach oben geneigt ist, um im Allgemeinen durchgehend mit dem oberen Wandabschnitt (12r) der Karosserieabdeckung (12) zu sein, wenn das Motorrad (1) von einer Seite davon betrachtet wird.

4. Motorrad (1) nach den Ansprüchen 2 oder 3, wobei ein oberer Wandabschnitt (12r) der Karosserieabdeckung (12) und ein Vorderkantenabschnitt (9e) des Sitzes (9) eine im Allgemeinen gekrümmte Form bilden, die sich nach unten wölbt, wenn das Motorrad (1) von einer Seite davon betrachtet wird.

5. Motorrad (1) nach einem der Ansprüche 2, 3 oder 4, wobei der Sitz (9) eine Sitzgrundplatte (87) hat, und ein oberer Wandabschnitt (12r) der Karosserieabdeckung (12) und die Sitzgrundplatte (87) des Sitzes (9) eine im Allgemeinen gekrümmte Form bilden, die sich nach oben wölbt, wenn das Motorrad (1) von einer Seite davon betrachtet wird.

6. Motorrad (1) nach einem der Ansprüche 2 bis 5, wobei der Sitz (9) eine Sitzgrundplatte (87) und ein Sitzkissen (85b) hat, das über der Sitzgrundplatte (87) angeordnet ist, wobei ein Vorderabschnitt (87b) der Sitzgrundplatte (87) weiter nach vorne übersteht als ein vorderes Ende des Sitzkissens (85b), und unter einem oberen Wandabschnitt (12r) der Karosserieabdeckung (12) eingefügt ist.

7. Motorrad (1) nach Anspruch 5 oder 6, wobei ein Zentrum zum Drehen des Sitzes (9) an dem Vorderabschnitt der Sitzgrundplatte (87) positioniert ist.

8. Motorrad (1) nach einem der Ansprüche 2 bis 7, wobei das Objektaufbewahrungselement (33) ein unteres Aufbewahrungselement (33e) hat, das an einer Position zwischen dem Kraftstofftank (30) und der Motoreinheit (8) angeordnet ist.

9. Motorrad (1) nach Anspruch 8, wobei das untere Aufbewahrungselement (33e) durch Bilden eines Basiswandabschnitts des Objektaufbewahrungselements (33), sodass es sich nach unten wölbt, gebildet ist.

10. Motorrad (1) nach den Ansprüchen 8 oder 9, wobei das untere Aufbewahrungselement (33e) ein Batteriegehäuseelement umfasst, um eine Batterie (Ba) aufzunehmen.

11. Motorrad (1) nach Anspruch 10, wobei eine Abdeckung (34), die angepasst ist, um das Batteriegehäuseelement zu öffnen und zu schließen, in dem Basiswandabschnitt des Objektaufbewahrungselements (33) bereitgestellt ist.

12. Motorrad (1) nach einem der vorhergehenden Ansprüche, wobei das Objektaufbewahrungselement (33) ein Helmaufbewahrungselement (33b, 33c) umfasst, das angepasst ist, um einen Helm (He) zu lagern.

13. Motorrad (1) nach Anspruch 12, wobei das Helmaufbewahrungselement (33b, 33c) ein vorderes Aufbewahrungselement (33b) und ein hinteres Aufbewahrungselement (33c) umfasst, das weiter zum Hinterteil des Motorrads angeordnet ist als das vordere Aufbewahrungselement (33b).

14. Motorrad (1) nach einem der vorhergehenden Ansprüche, das ferner eine Aufhängungseinheit (10) umfasst, die die Motoreinheit (8) und den Karosserierahmen (2) verbindet, wobei der Sitz (9) einen Hauptsitz (9a) und einen Tandemsitz (9b) umfasst, der am hinteren Ende des Hauptsitzes (9a) angeordnet ist, das Objektaufbewahrungselement (33) ein erstes Aufbewahrungselement (33b) und ein zweites Aufbewahrungselement (33c) hat, und die Aufhängungseinheit (10) zwischen dem ersten Aufbewahrungselement (33b) und dem zweiten Aufbewahrungselement (33c) angeordnet ist, wenn das Motorrad (1) von oben betrachtet wird.

15. Motorrad (1) nach Anspruch 14, wobei ein Basiswandabschnitt des zweiten Aufbewahrungselements (33c) an einer Position angeordnet ist, die höher als ein Basiswandabschnitt des ersten Aufbewahrungselements (33b) ist, ein zentrales Aufbewahrungselement (33d), das das erste Aufbewahrungselement (33b) und das zweite Aufbewahrungselement (33c) verbindet, zwischen dem ersten Aufbewahrungselement (33b) und dem zweiten Aufbewahrungselement (33c) gebildet ist, und die Aufhängungseinheit (10) unter dem zentralen Aufbewahrungselement (33d) angeordnet ist.

16. Motorrad (1) nach den Ansprüchen 14 oder 15, wobei die Aufhängungseinheit (10) angeordnet ist, um sich im Allgemeinen horizontal in die Richtung von vorne nach hinten des Motorrads (1) zu erstrecken, wenn das Motorrad von der Seite davon betrachtet wird.

## Revendications

1. Motocyclette (1) comprenant:
un châssis (2) ; et
une unité de motorisation (8) supportée oscillante par le châssis (2) de manière à être capable d'osciller vers le haut et vers le bas autour d'un centre d'oscillation, dans laquelle une section extrémité avant de l'unité de motorisation (8) peut osciller vers le haut et vers le bas, l'unité de motorisation (8) est formée en réunissant d'un seul tenant un corps de moteur (8a) et un carter de transmission (8b), le corps de moteur (8a) est un moteur monocylindre qui est monté de telle manière qu'un axe de cylindre (A) est essentiellement horizontal et présente une structure au sein de laquelle un bloc-cylindre (8b) et une culasse de cylindre (8e) sont réunis ensemble dans cet ordre sur une surface d'appariement avant d'un carter de moteur (8c) qui héberge un vilebrequin (18) qui est agencé de manière à s'étendre horizontalement dans la direction de largeur de véhicule, l'unité de motorisation (8) présente une roue arrière (7) agencée au niveau d'une section extrémité arrière du carter de transmission (8b), des organes de suspension gauche et droit (8j, 8j) sont formés de manière à faire saillie vers l'avant dans une section paroi inférieure du carter de moteur (8c), les organes de suspension (8j, 8j) sont supportés par des organes formant pivot gauche et droit (47, 47) du châssis (2) via un axe de pivot (51) de sorte que l'unité de motorisation (8) est supportée de manière à être capable d'osciller vers le haut et vers le bas, en étant centré sur un point situé au niveau du côté inférieur du carter de moteur (8c), le centre d'oscillation est situé en dessous du bloc-cylindre (8d) de l'unité de motorisation (8) entre un point d'extrémité avant et un point d'extrémité arrière du bloc-cylindre (8d) du corps de moteur (8a) dans une direction avant-arrière de la motocyclette (1) ;
la motocyclette (1) comprenant en outre :
un organe de stockage d'objet (33) agencé au-dessus de l'unité de motorisation (8) ; et
une selle (9) conçue pour ouvrir et fermer l'organe de stockage d'objet (33).

2. Motocyclette (1) selon la revendication 1, comprenant en outre :
un réservoir de carburant (30) agencé à l'avant de l'unité de motorisation (8) ; et
un carénage (12) qui recouvre le dessus et des côtés du réservoir de carburant (30).

3. Motocyclette (1) selon la revendication 2, dans laquelle le carénage (12) présente une section paroi supérieure (12r) qui recouvre le dessus du réservoir de carburant (30), la section paroi supérieure (12r) étant située au niveau d'une position qui est plus basse que la selle (9), dans laquelle une section bord avant (9e) de la selle (9) est inclinée vers l'arrière et vers le haut de manière à être essentiellement dans la continuité de la section paroi supérieure (12r) du carénage (12) lorsque la motocyclette (1) est observée depuis un côté de celle-ci.

4. Motocyclette (1) selon la revendication 2 ou 3, dans laquelle une section paroi supérieure (12r) du carénage (12) et une section bord avant (9e) de la selle (9) adopte une forme essentiellement courbe qui est bombée vers le bas lorsque la motocyclette (1) est considérée depuis un côté de celle-ci.

5. Motocyclette (1) selon l'une quelconque des revendications 2, 3 ou 4, dans laquelle la selle (9) présente une plaque de base de selle (87), et une section paroi supérieure (12r) du carénage (12) et la plaque de base de selle (87) de la selle (9) adoptent une forme essentiellement courbe qui est bombée vers le haut lorsque la motocyclette (1) est observée depuis un côté de celle-ci.

6. Motocyclette (1) selon l'une quelconque des revendications 2 à 5, dans laquelle la selle (9) présente une plaque de base de selle (87) et un coussin de selle (85b) agencés au-dessus de la plaque de base de selle (87), dans laquelle une section avant (87b) de la plaque de base de selle (87) fait saillie vers l'avant davantage qu'une extrémité avant du coussin de selle (85b), et est insérée en dessous d'une section paroi supérieure (12r) du carénage (12).

7. Motocyclette (1) selon la revendication 5 ou 6, dans laquelle un centre de rotation de la selle (9) est positionné au niveau de la section avant de la plaque de base de selle (87).

8. Motocyclette (1) selon l'une quelconque des revendications 2 à 7, dans laquelle l'organe de stockage d'objet (33) présente un organe de stockage inférieur (33e) qui est agencé au niveau d'une position située entre le réservoir de carburant (30) et l'unité de motorisation (8).

9. Motocyclette (1) selon la revendication 8, dans laquelle l'organe de stockage inférieur (33e) est formé grâce à une étape consistant à former une section paroi de base de l'organe de stockage d'objet (33) afin qu'elle bombe vers le bas.

10. Motocyclette (1) selon la revendication 8 ou 9, dans laquelle l'organe de stockage inférieur (33e) comprend un organe d'hébergement de batterie permettant d'héberger une batterie (Ba).

11. Motocyclette (1) selon la revendication 10, dans laquelle un carénage (34) conçu pour ouvrir et fermer l'organe d'hébergement de batterie est fourni dans la section paroi de base de l'organe de stockage d'objet (33).

12. Motocyclette (1) selon l'une quelconque des revendications précédentes, dans laquelle l'organe de stockage d'objet (33) comprend un organe de stockage de casque (33b, 33c) conçu pour stocker un casque (He).

13. Motocyclette (1) selon la revendication 12, dans laquelle l'organe de stockage de casque (33b, 33c) comprend un organe de stockage avant (33b) et un organe de stockage arrière (33c) qui est agencé davantage vers l'arrière de la motocyclette que l'organe de stockage avant (33b).

14. Motocyclette (1) selon l'une quelconque des revendications précédentes, comprenant en outre une unité de suspension (10) qui raccorde l'unité de motorisation (8) et le châssis (2), dans laquelle la selle (9) comprend une selle principale (9a) et une selle duo (9b) agencée à l'arrière de la selle principale (9a), l'organe de stockage d'objet (33) présente un premier organe de stockage (33b) et un deuxième organe de stockage (33c), et l'unité de suspension (10) est agencée entre le premier organe de stockage (33b) et le deuxième organe de stockage (33c) lorsque la motocyclette (1) est observée depuis le dessus.

15. Motocyclette (1) selon la revendication 14, dans laquelle une section paroi de base du deuxième organe de stockage (33c) est située au niveau d'une position qui est plus haute qu'une section paroi de base du premier organe de stockage (33b), un organe de stockage central (33b) qui raccorde le premier organe de stockage (33b) et le deuxième organe de stockage (33c) est formé entre le premier organe de stockage (33b) et le deuxième organe de stockage (33c), et l'unité de suspension (10) est agencée en dessous de l'organe de stockage central (33d).

16. Motocyclette (1) selon la revendication 14 ou 15, dans laquelle l'unité de suspension (10) est agencée de manière à s'étendre de manière essentiellement horizontale dans la direction avant-arrière de la motocyclette (1) lorsque la motocyclette est observée depuis le côté de celle-ci.
